# EUROPEAN PATENT SPECIFICATION

(11) **EP 3 504 282 B1**
(45) Date of publication and mention of the grant of the patent: **01.09.2021**
(21) Application number: 17893798.3
(22) Date of filing: 27.01.2017
(51) Int. Cl.: C09D 11/324, C09D 11/102, C09D 11/38, C09C 1/56, C09C 3/04

(54) **INKJET INK COMPOSITIONS**
TINTENSTRAHLTINTENZUSAMMENSETZUNGEN
COMPOSITIONS D'ENCRE POUR IMPRESSION PAR JET D'ENCRE

(43) Date of publication of application: 03.07.2019
(73) Proprietor: Hewlett-Packard Development Company, L.P., Spring TX 77389 (US)
(72) Inventor: HARVEY, Natalie, Corvallis, Oregon 97330-4239 (US); BUTLER, Thomas W., Corvallis, Oregon 97330-4239 (US); JAKUBEK, Vladimir, Corvallis, Oregon 97330-4239 (US)
(74) Representative: Plasseraud IP
(86) International application number: PCT/US2017/015416
(87) International publication number: WO 2018/140040

(56) References cited:
- EP-A1- 1 666 550
- WO-A1-2004/104119
- WO-A1-2011/115614
- WO-A1-2015/187181
- CN-A- 102 558 943
- US-B2- 9 090 734

## Description

### BACKGROUND

Inkjet printing has become a popular way of recording images on various media. Some of the reasons include low printer noise, variable content recording, capability of high speed recording, and multi-color recording. These advantages can be obtained at a relatively low price to consumers. As the popularity of inkjet printing increases, the types of use also increase, providing a demand for new and durable inkjet ink compositions.

### BRIEF DESCRIPTION OF THE DRAWINGS

FIG. 1 graphically represents an example method of making an inkjet composition in accordance with the present disclosure;
FIG. 2 graphically represents an example method of printing an inkjet composition in accordance with the present disclosure;
FIG. 3 provides example two-pass highlighter smear results for ink compositions incorporating various solvent packages in accordance with the present disclosure;
FIG. 4 provides example two-pass highlighter smear results for ink compositions incorporating various solvent packages in accordance with the present disclosure;
FIG. 5 provides example two-pass highlighter smear results for ink compositions incorporating various solvent packages and binder concentrations in accordance with the present disclosure;
FIG. 6 provides example two-pass highlighter smear results for ink compositions incorporating various types of polyurethane binder in accordance with the present disclosure;
FIG. 7 presents two-pass highlighter smear results for ink compositions incorporating various solvent loads in accordance with an example of the present disclosure;
FIG. 8 presents two-pass highlighter smear results for ink compositions incorporating various solvent loads in accordance with an example of the present disclosure; and
FIG. 9 presents two-pass highlighter smear results for ink compositions incorporating various polyurethane binder loads in accordance with an example of the present disclosure.

### DETAILED DESCRIPTION

Inkjet printing has been popular for home and office printing because of its low cost and overall quality. As printing speeds of inkjet printers increase and advancements in inkjet inks have occurred, these low cost printers are moving into the areas where there would be a benefit of higher performance, e.g., higher workloads, high output quality, production of crisp prints on plain paper, etc. The production of crisp prints on plain paper can be challenging in inkjet printing because typical inkjet ink compositions tend to smear. The durability of the printed images can be improved by increasing the amount of binder and consequently the solids in the composition, or by incorporating latex particles into the inks. However, both of these methods can result in other printability issues, including kogation and/or printing plate ink build up, resulting in jetting issues and tube or printing orifice clogging. Furthermore, when latex additives are used in inkjet ink compositions, heat is often used post printing to cause the latex particles to form a film on the page, thereby increasing the time and costs associated with printing. In one example of the present disclosure, the inkjet compositions herein can increase durability of the printed image while incorporating minimal amounts of binder, thereby reducing print issues associated with kogation and printing plate ink build up.

In accordance with this, an inkjet ink composition can include carbon black pigment; polyurethane; at least 50 wt% water; and from 1 wt% to 12 wt% of a solvent having 1 or 2 free hydroxyl groups (e.g., one or two) and 0 to 3 glycol units (e.g., zero, one, two or three) and comprises co-solvent that is different than the solvent or combination of the solvents, wherein the co-solvent is present at a total content from 15 wt% to 25 wt%, and wherein the co-solvent is 1-hydroxyethyl-2-pyrrolidone, 2-pyrrolidone, or a combination thereof. In one example, the carbon black pigment can be ionized using light, ultraviolet radiation, ozone, or a combination thereof.

The carbon black can be present at from 2 wt% to 6wt% in some examples. In another example, the solvent or combination of the solvents can be present at from 1 wt% to 8 wt%, or from 2.5 wt% to 6.5 wt%. In one example, the solvent can be selected from tripropylene glycol, tripropylene glycol methyl ether, tripropylene glycol monobutyl ether, tripropylene glycol monoethyl ether, triethylene glycol, triethylene glycol methyl ether, triethylene glycol monobutyl ether, triethylene glycol monomethyl ether, diethylene glycol, diethylene glycol butyl ether, ethylene glycol, ethylene glycol butyl ether, ethylene glycol phenyl ether, 3-methyl-1,3-butanediol, 2-ethyl-2-hydroxymethyl-1,3,-propanediol, 2-methyl-2,4-pentanediol, 3-methyl-1,5-pentadiol, 2-ethyl-1,3-hexanediol, or a combination thereof. For clarity, as used herein "solvent" specifically refers to a liquid in which a solute can be dissolved, where the liquid has 1 or 2 free hydroxyl groups and 0 to 3 glycol units. As used herein, "solvent" does not refer to water (as water is otherwise mentioned specifically as an ingredient) and/or other co-solvents. Co-solvent(s) include organic solvents that are other those defined herein as "solvents," e.g., they do not have 1 or 2 free hydroxyl units and 0 to 3 glycol units. Co-solvents are present at a total content from 15 wt% to 25 wt%. Co-solvents that are present are 1-hydroxyethyl-2-pyrrolidone, 2-pyrrolidone, or a combination thereof. The polyurethane can be present at from 0.1 wt% to 4 wt% in one example, from 0.5 wt% to 2 wt% in another example, and from 1 wt% to 3 wt% in yet another example. The weight average molecular weight of the polyurethane can be from 3,000 Mw to 70,000 Mw, for example. In still another example, the polyurethane to pigment weight ratio can be from 1:10 to 1:2.

In another example, a method of making an inkjet ink composition can include surface treating carbon black pigment to generate ionized carbon black pigment; and admixing the ionized carbon black pigment with a liquid vehicle to form an inkjet ink composition. The inkjet ink composition can include from 2 wt% to 6 wt% of the ionized carbon black pigment; from 0.1 wt% to 4 wt% polyurethane; at least 50 wt% water; and from 1 wt% to 12 wt% of a solvent having 1 or 2 free hydroxyl groups and 0 to 3 glycol units. In one example, the solvent or combination of solvents can be selected from tripropylene glycol, tripropylene glycol methyl ether, tripropylene glycol monobutyl ether, tripropylene glycol monoethyl ether, triethylene glycol, triethylene glycol methyl ether, triethylene glycol monobutyl ether, triethylene glycol monomethyl ether, diethylene glycol, diethylene glycol butyl ether, ethylene glycol, ethylene glycol butyl ether, ethylene glycol phenyl ether, 3-methyl-1,3-butanediol, 2-ethyl-2-hydroxymethyl-1,3,-propanediol, 2-methyl-2,4-pentanediol, 3-methyl-1,5-pentadiol, 2-ethyl-1,3-hexanediol, or a combination thereof. In one example, in addition to any solvent content, the inkjet ink composition can further include co-solvent that is different than the solvent or combination of the solvents. The co-solvent content in total can range from 0.5 wt% to 25 wt%, for example.

In another example, a method of printing onto a print medium can include inkjet printing an inkjet ink composition onto a print medium. The inkjet ink composition can include carbon black pigment; polyurethane; at least 50 wt% water; and from 1 wt% to 12 wt% of a solvent having 1 or 2 free hydroxyl groups and 0 to 3 glycol units. In one example, the solvent or combination of solvents can be selected from tripropylene glycol, tripropylene glycol methyl ether, tripropylene glycol monobutyl ether, tripropylene glycol monoethyl ether, triethylene glycol, triethylene glycol methyl ether, triethylene glycol monobutyl ether, triethylene glycol monomethyl ether, diethylene glycol, diethylene glycol butyl ether, ethylene glycol, ethylene glycol butyl ether, ethylene glycol phenyl ether, 3-methyl-1,3-butanediol, 2-ethyl-2-hydroxymethyl-1,3,-propanediol, 2-methyl-2,4-pentanediol, 3-methyl-1,5-pentadiol, 2-ethyl-1,3-hexanediol, or a combination thereof. In one example, the polyurethane can be present at from 0.1 wt% to 4 wt%.

Turning now to the specific ingredients that can be used in the inkjet ink composition, as noted, the inkjet ink composition can include a carbon black pigment. In one example, the carbon black pigment can be a self-dispersing carbon black pigment. In another example, the carbon black can be surface treated, such as by light, ultra-violet radiation, or ozone. The surface treatment can result in carbon black pigment with an ionized surface, also referred to herein as "ionized carbon black pigment." In one example, the surface treatment can be carried out by exposing the carbon black pigment to both light and ozone, resulting in small molecules being generated at the surface of the carbon black.

The carbon black pigment can be present in the inkjet ink composition at various concentrations. In one example, the carbon black pigment can be present in the ink at from about 2 wt% to about 6 wt%. In another example, the carbon black pigment can be present at from about 3 wt% to about 5 wt%. In yet another example, the carbon black pigment can be present from about 4 wt% to about 5 wt%.

One advantage of the inkjet ink compositions of the present disclosure relates to the durability of the printed image. This can be accomplished with, in some examples, only minimal amounts of binder, which as described herein can include polyurethane. In one example, the inkjet ink compositions can include from 0.1 wt% to 4 wt% polyurethane. In another example, the compositions can include from 0.5 wt% to 2 wt% polyurethane. In another example, the compositions can include from about 1 wt% to 3 wt%. In yet another example, the compositions can include from about 0.1 wt% to about 1.2 wt% polyurethane. In a further example, the inkjet ink compositions presented herein can include from 0.1 wt% to 1 wt% polyurethane. In a further example, the inkjet ink compositions can be devoid of other binders that are not polyurethane.

The weight average molecular weight of the polyurethane in the composition can vary. In one example, the polyurethane can have an average molecular weight ranging from about 3,000 Mw to about 70,000 Mw. In yet another example, the average molecular weight of the polyurethane can range from about 15,000 Mw to about 50,000 Mw. In a further example, the polyurethane can have an average molecular weight ranging from about 5,000 Mw to about 25,000 Mw.

The polyurethane to carbon black pigment ratio in the ink compositions can also vary. In one example, the polyurethane to carbon black pigment ratio can range from about 1:10 to about 1:2. In another example, the polyurethane to carbon black pigment ratio can range from about 1:8 to about 1:2. In yet another example, the polyurethane to carbon black pigment ratio can range from about 1:6 to about 1:2. In a further example, the polyurethane to carbon black pigment ratio can range from about 1:5 to about 1:2.

Turning now to the water content in the inkjet ink composition, in one example, the composition can include at least 50 wt% water. In another example, the inkjet ink composition can include at least 60 wt% water. In yet another example, the inkjet ink composition can include at least 65 wt% water. In another example, the inkjet ink composition can include from 50 wt% to 90 wt% water. In another example, the inkjet ink composition can include from 60 wt% to 80 wt% water. In a further example, inkjet ink composition can include from 65 wt% to 75 wt% water. In one example, the water can be deionized, purified, or a combination thereof.

In accordance with examples of the present disclosure, a solvent or combination of solvents can be included that enhance the durability of the inkjet ink composition. Thus, the term "solvent" herein refers to these durability enhancing solvents (or combination of these solvents) that include 1 or 2 free hydroxyl groups and 0 to 3 glycol units. In one example, the solvents can be listed as follows: tripropylene glycol, tripropylene glycol methyl ether, tripropylene glycol monobutyl ether, tripropylene glycol monoethyl ether, triethylene glycol, triethylene glycol methyl ether, triethylene glycol monobutyl ether, triethylene glycol monomethyl ether, diethylene glycol, diethylene glycol butyl ether, ethylene glycol, ethylene glycol butyl ether, ethylene glycol phenyl ether, 3-methyl-1,3-butanediol, 2-ethyl-2-hydroxymethyl-1,3,-propanediol, 2-methyl-2,4-pentanediol, 3-methyl-1,5-pentadiol, 2-ethyl-1,3-hexanediol, or a combination thereof. In another example, the solvent can include triethylene glycol monobutyl ether, tripropylene glycol monoethyl ether, 2-ethyl-1,3-hexanediol, or a combination thereof. Any other organic co-solvent that is included, other than water, is defined herein to be a "co-solvent." Thus, in one example, the ink composition can include from 1 wt% to 12 wt% of solvent (or total solvent content) plus water, and other co-solvent(s). In another example, the solvent can be present in the ink composition from 2.5 wt% to 6.5 wt%. In yet another example, the solvent can be present in the ink composition from 1 wt% to 8 wt%. In a further example, the solvent can be present in the ink composition at less than from 1 wt% to 6 wt%. In one specific example, the solvent can be or include 2-ethyl-1,3-hexanediol. In yet another example, the solvent can be or include tripropylene glycol monoethyl ether.

Regarding the co-solvent, the inkjet ink compositions further includes other organic compositions that act as a co-solvent, but which are not specifically described as being part of the "solvent." The co-solvent is present from 15 wt% to 25 wt%. The co-solvent is 1-hydroxyethyl-2-pyrrolidone, 2-pyrrolidone, or a combination thereof. The inkjet ink compositions can further exclude co-solvents that diminish ink durability. In one example, the ink compositions can exclude the co-solvent 3-methyl-1,3,5-pentanetriol. As used herein, "solvent" and "co-solvent" do not refer to water in the composition.

Consistent with the inkjet ink compositions of the present disclosure, various other additives can be employed to enhance properties of the ink composition for specific applications. Examples of these additives can include, but are not limited to, additional polymers, solvents, surfactants, antibacterial agents, UV compositions, sequestering agents, buffers, viscosity modifiers, and/or other additives.

In some examples, the inkjet ink compositions can further include a surfactant. In one example, the surfactant can include Surfynol® 104, Surfynol® 440, (both available from Air Products and Chemicals Inc., Pennsylvania), Surfadone™ LP-100 (available from Ashland® Inc., Kentucky), BYK® 3410, BYK® 3400 (both available from BYK® USA Inc. Connecticut), or a combination thereof. The surfactant or combinations of surfactants can be present in the inkjet ink composition at from about 0.001 wt% to about 10 wt% and; and in some examples, can be present at from about 0.001 wt% to about 5 wt%. In other examples the surfactant or combinations of surfactants can be present at from about 0.01 wt% to about 3 wt% of the inkjet ink composition.

In one example, the surfactant can be a non-ionic surfactant. Some specific examples of the non-ionic surfactant that may be used in the ink composition disclosed herein include acetylene diols, bis-tartrate esters,1,2-hexanediol, mono alcohols, N-alkylpyrrolidinones, and combinations thereof. One example of the acetylene diol is Surfyonol® 104 (Products and Chemicals Inc., Pennsylvania). Examples of suitable bis-tartrate esters include diisoamyl tartrate, dibutyl tartrate, dibenzyl tartrate, and diisopropyl tartrate. Some examples of suitable mono alcohols include lauryl alcohol (i.e., 1-dodecanol), oleyl alcohol (i.e., octadec-9-en-1-ol), stearyl alcohol (i.e., 1-octadecanol), and combinations thereof. Examples of the N-alkylpyrrolidinone are N-octylpyrrolidinone and N-dodecylpyrrolidinone. Some commercially available N-alkylpyrrolidinones include Surfadone™ LP-100 (octylpyrrolidinone) and Surfadone™ LP-300(dodecylpyrrolidinone) (both available from Ashland® Inc., Kentucky). In one example, the non-ionic surfactant that is selected can exclude ethyleneoxy groups.

In one example, the additional component can be those added to inhibit the growth of harmful microorganisms. These additives may be biocides, fungicides, and other microbial agents, which are routinely used in ink formulations. Examples of suitable microbial agents can include, but are not limited to, Acticide® (Thor Specialties Inc., Connecticut), Nuosept™ (Troy Corporation, New Jersey.), Ucarcide™ (Union Carbide Corp., Texas), Vancide® (Vanderbilt Minerals, LLC, Connecticut), Proxel® (Lonza Group Ltd., Maryland), and combinations thereof.

In another example, sequestering agents such as EDTA (ethylene diamine tetra acetic acid) can be included to eliminate the deleterious effects of heavy metal impurities. In yet another example, buffer solutions can be used to control the pH of the ink.

The inkjet ink compositions presented herein can provide printed images exhibiting an improved durability over a comparative formulation that incorporates everything but the solvent, with the amount of solvent being replaced proportionally by the co-solvent used in that particular inkjet ink composition. Durability can be tested using a two-pass highlighter smear test at a time interval of one hour after inkjet printing. In one example, improvement in durability can be 20 mOD units or more when tested using a two-pass highlighter smear test at one hour after printing. In another example, the improvement in durability can be 30 mOD units or more. In yet another example, the improvement in durability can be 40 mOD units or more.

As used herein, "two-pass highlighter smear" refers to a smear test conducted with the application of two-passes with a Faber-Castell® highlighter (available from Faber-Castell® Aktiengesellschaft, Germany) at a pressure weight of 500 grams across an image. The image is printed at a predetermined time interval prior to conducting the test, and can be, for example, one hour. The paper used for the two-pass highlighter smear test can be plain paper, such as HP® Multipurpose paper (available from Hewlett-Packard, Co., California). This test is used to determine a milli-optical density (mOD) measurement of the smear (not the printed image). A larger mOD value indicates more smearing and lower print durability for the ink composition; whereas a smaller mOD value indicates less smearing and a higher print durability for the ink composition.

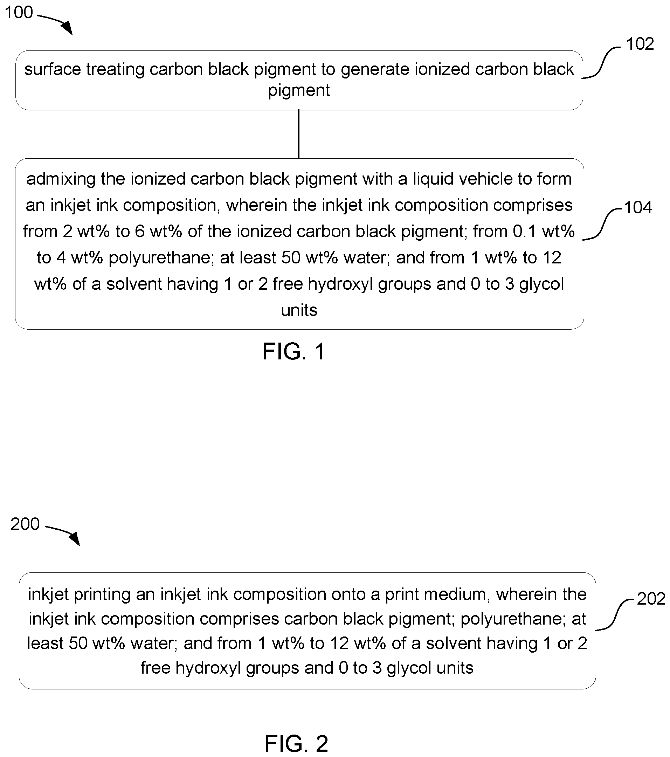

Turning now to the methods described herein, in one example, a method 100 of making an inkjet ink composition is shown in FIG. 1. In one example, the method can include surface treating 102 a carbon black pigment to generate an ionized carbon black pigment, and admixing 104 the ionized carbon black pigment into a liquid vehicle to generate an inkjet ink composition. In One example, the resulting inkjet ink composition can include from 2 wt% to 6 wt% of the ionized carbon black pigment, from 0.1 wt% to 4 wt% polyurethane, at least 50 wt% water, and from 1 wt% to 12 wt% of a solvent having 1 or 2 free hydroxyl groups and 0 to 3 glycol units. In another example, the carbon black pigment can be surface treated using light, ultraviolet radiation, ozone, or a combination thereof. Example solvents can include tripropylene glycol, tripropylene glycol methyl ether, tripropylene glycol monobutyl ether, tripropylene glycol monoethyl ether, triethylene glycol, triethylene glycol methyl ether, triethylene glycol monobutyl ether, triethylene glycol monomethyl ether, diethylene glycol, diethylene glycol butyl ether, ethylene glycol, ethylene glycol butyl ether, ethylene glycol phenyl ether, 3-methyl-1,3-butanediol, 2-ethyl-2-hydroxymethyl-1,3,-propanediol, 2-methyl-2,4-pentanediol, 3-methyl-1,5-pentadiol, 2-ethyl-1,3-hexanediol, or a combination thereof. In yet another example, the inkjet ink composition can be as described above.

In another example, a method 200 of printing onto a print medium is shown in FIG. 2. In one example, the method can include inkjet printing 202 an inkjet ink composition onto a print medium. In another example, the inkjet ink composition can include carbon black pigment, polyurethane, at least 50 wt% water, and from 1 wt% to 12 wt% of a solvent having 1 or 2 free hydroxyl groups and 0 to 3 glycol units. In one example, the solvent can include tripropylene glycol, tripropylene glycol methyl ether, tripropylene glycol monobutyl ether, tripropylene glycol monoethyl ether, triethylene glycol, triethylene glycol methyl ether, triethylene glycol monobutyl ether, triethylene glycol monomethyl ether, diethylene glycol, diethylene glycol butyl ether, ethylene glycol, ethylene glycol butyl ether, ethylene glycol phenyl ether, 3-methyl-1,3-butanediol, 2-ethyl-2-hydroxymethyl-1,3,-propanediol, 2-methyl-2,4-pentanediol, 3-methyl-1,5-pentadiol, 2-ethyl-1,3-hexanediol, or a combination thereof. In one example, the print medium can be a plain paper medium, a coated paper medium, a photo paper medium, or a combination thereof. In another example, the inkjet ink composition can be as described above.

It is noted that, as used in this specification and the appended claims, the singular forms "a," "an," and "the" include plural referents unless the content clearly dictates otherwise.

**As** used herein, the term "about" is used to provide flexibility to a numerical range endpoint by providing that a given value may be "a little above" or "a little below" the endpoint. The degree of flexibility of this term can be dictated by the particular variable and would be within the knowledge of those skilled in the art to determine based on experience and the associated description herein.

As used herein, "solvent" specifically refers to an organic liquid (or combination of organic liquids) having 1 or 2 free hydroxyl groups and 0 to 3 glycol units. Notably, the presence of excess hydroxyl groups (greater than 2), or no hydroxyl groups, did not provide the same level of durability enhancement as compared to the use of solvents with 1 or 2 hydroxyl groups. Similarly, if a glycol solvent, excessive glycol groups (greater than 3) did not tend to provide the same level of durability enhancement. The durability enhancement was found to be useful in the presence of polyurethane type binders. The term solvent does not include water herein, as that ingredient is mentioned separately.

The present disclosure sets forth "co-solvent(s)" separately herein, and is not considered as part of the above-defined "solvent(s)." Co-solvents do not tend to improve durability in combination with polyurethane. These "co-solvents" are usually added for reasons other than for synergistic polyurethane durability enhancement, e.g., kogation, print quality, etc. Thus, co-solvent(s) include organic solvents that are other those defined herein as "solvents," e.g., they do not have 1 or 2 free hydroxyl units and 0 to 3 glycol units.

"Inkjet ink composition," "ink composition," and "composition" can be used interchangeably.

"Substrate," "media," "medium," "print medium," or "media substrate" includes any base material is suitable for printing. In one example, the media can be plain paper.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

Concentrations, dimensions, amounts, and other numerical data may be presented herein in a range format. It is to be understood that such range format is used merely for convenience and brevity and should be interpreted flexibly to include not only the numerical values explicitly recited as the limits of the range, but also to include all the individual numerical values or sub-ranges encompassed within that range as if each numerical value and sub-range is explicitly recited. For example, a weight ratio range of about 1 wt% to about 20 wt% should be interpreted to include not only the explicitly recited limits of about 1 wt% and about 20 wt%, but also to include individual weights such as 2 wt%, 11 wt%, 14 wt%, and sub-ranges such as 10 wt% to 20 wt%, 5 wt% to 15 wt%, etc.

### EXAMPLES

The following examples illustrate the technology of the present disclosure. However, it is to be understood that the following is only exemplary or illustrative of the application of the principles of the presented formulations and methods. Numerous modifications and alternative methods may be devised by those skilled in the art without departing from the spirit and scope of the present disclosure. The appended claims are intended to cover such modifications and arrangements. Thus, while the technology has been described above with particularity, the following provide further detail in connection with what are presently deemed to be the acceptable examples.

### Example 1 - Sample Ink Compositions

Several different ink compositions were formulated to test their durability. The general inkjet ink composition is shown in Table 1 below and the various solvents in each formulation are provided in Table 2.

**Table 1 - Inkjet Ink Composition**

| **Ingredient** | **Weight %** |
|---|---|
| Ionized Carbon Black | 4.4 |
| Polyurethane | 1.7 |
| Water | 69.53 |
| Solvent (See Table 2) | Collectively 24 |
| Co-solvent (See Table 2) | |
| Surfactant | 0.1 |
| Biocide | 0.27 |
| **Total** | 100 |

**Table 2 - Formulation ID and Solvent/Co-solvent Combination**

| **ID** | **Solvent** | **Co-Solvent** |
|---|---|---|
| 0 (comp) | -- | 1-hydroxyethyl-2-pyrrolidone (16 wt%) |
| | | 2P (8 wt%) |
| 1 | -- | 3-methyl-1,3,5-pentanetriol (5 wt%) |
| | | 1-hydroxyethyl-2-pyrrolidone (11 wt%) |
| | | 2P (8 wt%) |
| 2 | Tripropylene glycol monoethyl ether (5 wt%) | 1-hydroxyethyl-2-pyrrolidone (11 wt%) |
| | | 2P (8 wt%) |
| 3 | Triethylene glycol monobutyl ether (5 wt%) | 1-hydroxethyl-2-pyrrolidone (11 wt%) |
| | | 2P (8 wt%) |
| 4 | 2-ethyl-1,3-hexanediol (5 wt%) | 1-hydroxyethyl-2-pyrrolidone (11 wt%) |
| | | 2P (8 wt%) |
| 5 | -- | 1-hydroxyethyl-2-pyrrolidone (16 wt%) |
| | | 2P (8 wt%) |
| 6 | Triethylene glycol monoethyl ether (5 wt%) | 1-hydroxethyl-2-pyrrolidone (11 wt%) |
| | | 2P (8 wt%) |
| 7 | Tripropylene glycol monoethyl ether (5 wt%) | 1-hydroxyethyl-2-pyrrolidone (11 wt%) |
| | | 2P (8 wt%) |
| 8 | 2-ethyl-1,3-hexanediol (5 wt%) | 1-hydroxyethyl-2-pyrrolidone (11 wt%) |
| | | 2P (8 wt%) |
| 9 | -- | 3-methyl-1,3,5-pentanetriol (5 wt%) |
| | | 1-hydroxyethyl-2-pyrrolidone (11 wt%) |
| | | 2P (8 wt%) |

### Example 2 -Two-pass Highlighter Smear Testing

**The** various formulations from Example 1 were tested for their durability using the two-pass highlighter spear testing protocol described herein. Specifically, comparative Formulation 0 and Formulations 1-4 were tested to determine which solvent(s)/co-solvent systems resulted in the greatest improvement in durability of a printed image. From that test, additional formulations were prepared for further testing, which are identified below as Formulations 5-9.

The durability test was a two-pass highlighter smear test. Identical images were printed using a HP® Officejet® Pro 8000 inkjet printer (available from available from Hewlett-Packard, Co., California) onto HP® Multipurpose paper media with ColorLok technology® (also available from Hewlett-Packard, Co., California). The printed images were allowed to dry for one hour. After drying, a Faber-Castell® highlighter (available from Faber-Castell® Aktiengesellschaft, Germany) was passed over the image at 500 grams weight pressure, two times. The smear was measured using a portable GretagMacbeth® Spectrolino® densitometer (discontinued, previously available from X-Rite®, Inc., Missouri) to determine the milli-optical density (mOD) of the smear trail. A high mOD value indicated a greater degree of smearing and a less durable ink composition, and a low mOD value indicated less smearing and a more durable inkjet ink composition.

**Table 3 - Two-oass Highlighter Smear Results**

| **ID** | **Smear Value (mOD)** |
|---|---|
| 0 | 47 |
| 1 | 70 |
| 2 | 56 |
| 3 | 44 |
| 4 | 30 |

**Table 4 - Two-pass Highlighter Smear Results**

| **ID** | **Smear Value (mOD)** |
|---|---|
| 5 | 63 |
| 6 | 29 |
| 7 | 31 |
| 8 | 26 |
| 9 | 71 |

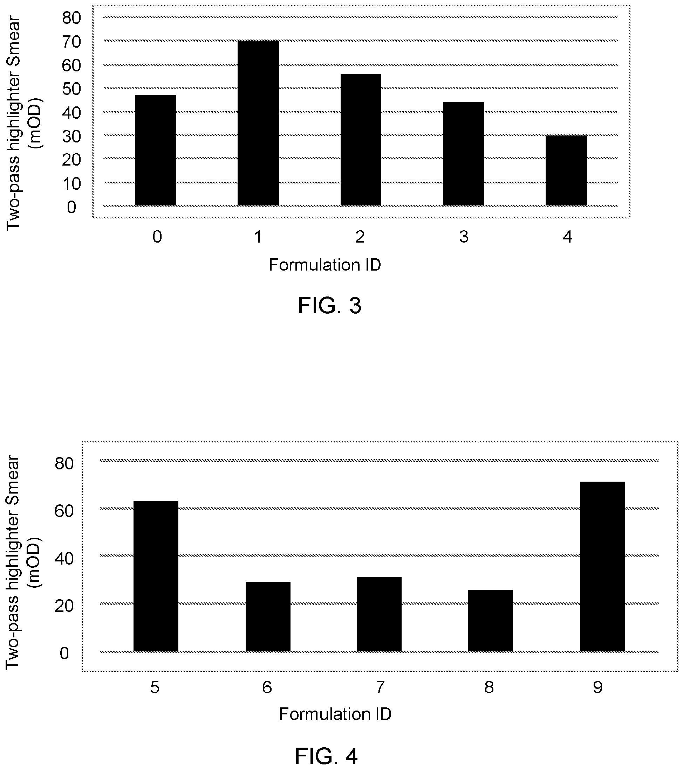

The Table 3 results are shown graphically in FIG. 3, and Table 4 results are shown graphically in FIG. 4. As shown, with respect to Table 3 and FIG. 3, the solvent package used in Formulation 4 had the best durability and the solvent package used in Formulation 1 had the worst durability. In further detail, and as shown in Table 4 and FIG. 4, Formulations 5 and 9 were outperformed by Formulations 6-8.

### Example 3 - Testing Binder Load with Various Solvents

Several different ink compositions were formulated that incorporated various solvents and differing polyurethane binder concentrations. The base formulation for these inks is shown in Table 5 below.

**Table 5 - Inkjet Ink Composition**

| **Ingredient** | **Weight %** |
|---|---|
| Ionized Carbon Black | 4.4 |
| Polyurethane | See Table 6 |
| Water | 78.53 |
| Solvent (See Table 6) | Collectively 15.00 |
| Co-solvent (See Table 6) | |
| Surfactant | 0.1 |
| Biocide | 0.27 |
| Total | 100 |

**Table 6 - Formulation ID, Solvent/Co-solvent Combination, Binder Load, and Smear Value**

| **ID** | **Solvent Package** | **Co-solvent Package** | **Binder Load (Weight %)** | **Smear Value (mOD)** |
|---|---|---|---|---|
| 10 | 2-ethyl-1, 3-hexanediol (5%) | 2-pyrrolidone (10%) | 1.7 | 30 |
| 11 | 3-methyl-1,3,5-pentanediol (5%) | 1-hydroxyethyl-2-pyrrolidone (10%) | 3.5 | 61 |
| 12 | 3-methyl-1,3,5-pentanediol (10%) | 1-hydroxyethyl-2-pyrrolidone (4.9%) | 3.5 | 96 |
| 13 | 2-ethyl-1, 3-hexanediol (5%) | 1-hydroxyethyl-2-pyrrolidone (5%), 2-pyrrolidone (5%), | 1.7 | 16 |
| 14 | 2-ethyl-1, 3-hexanediol (5%) | 2-pyrrolidone (10%) | 3.5 | 22 |
| 15 | 2-ethyl-1, 3-hexanediol (5%), triethylene glycol monobutyl ether (5%) | 1-hydroxyethyl-2-pyrrolidone (4.9%) | 1.7 | 24 |
| 16 | Tripropylene glycol (5%), triethylene glycol monobutyl ether (5%) | 1-hydroxyethyl-2-pyrrolidone (4.9%) | 3 | 41 |

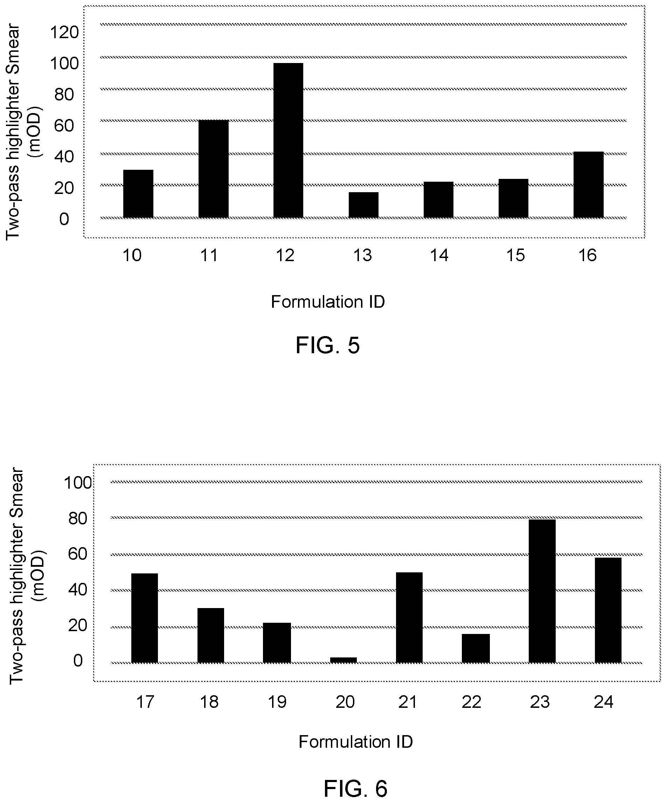

Formulations 10-16 were tested using a two-pass highlighter smear test, as described above. Based on the testing it was determined that a higher binder load was not necessary to improve the durability of the printed image, and in some case, higher binder load in combination with certain solvent/co-solvent systems actually decreased the print durability. The results of the smear test shown above in Table 6 are also shown graphically in FIG. 5.

### Example 4 - Testing Polyurethane Binder Types

Several different ink compositions were formulated that incorporated different polyurethane binders and/or polyurethane co-polymer binders. Polyurethane can be varied in many different ways, and various different polyurethanes were tested to verify general improvement in durability can occur when adding the solvents of the present disclosure to the inks that contain various types of polyurethane. In other words, durability enhancement provided by these added solvents can be generated with any of a number of types of polyurethanes and modified polyurethanes.

The base formulation for these inks is shown in Table 7 below and the Smear testing values are shown in Table 8, as follows:

**Table 7 - Inkjet Ink Composition**

| **Ingredient** | **Weight %** |
|---|---|
| Ionized Carbon Black | 4.4 |
| Polyurethane | 1.7* |
| Water | 69.53 |
| Solvent | Collectively 24 |
| Co-solvent | |
| Surfactant | 0.1 |
| Biocide | 0.27 |
| Total | 100 |

| | |
|---|---|
| *8 different types of polyurethane were tested | |

**Table 8 - Formulation ID and Smear Value Using Eight Different Types of Polyurethane Binder**

| **ID** | **Smear Value (mOD)** |
|---|---|
| 17 | 49 |
| 18 | 30 |
| 19 | 22 |
| 20 | 3 |
| 21 | 50 |
| 22 | 16 |
| 23 | 79 |
| 24 | 58 |

Formulations 17-24 were tested using a two-pass highlighter smear test, as described above. Based on the testing it was determined that the type of polyurethane binder in the composition can have some effect on the durability of the printed image. However, regardless of the variations in the polyurethane binder, the results also showed an improvement of 20 mOD units was achieved by incorporating the solvent packages presented herein with any of the polyurethane binders. The results of the smear test provided in Table 8 are also shown graphically in FIG. 6.

### Example 5 - Testing the Effect of Solvent Load Amount on Durability

Several different ink compositions were formulated incorporating different amounts of solvent. The adjustments in the amount of tripropylene glycol monoethyl ether (TPGME) were accounted for by adjusting the amount of 1-hydroxyethyl-2-pyrrolidone (HE2P) in the composition. The base formulation for these inks is shown in Table 9 below.

**Table 9 - Inkjet Ink Composition**

| **Ingredient** | **Weight %** |
|---|---|
| Ionized Carbon Black | 4.4 |
| Polyurethane | 1.7 |
| Water | 69.53 |
| Tripropylene glycol monoethyl ether (Solvent) | Collectively 24 |
| 1-hydroxyethyl-2-pyrrolidone (Co-solvent) | |
| 2-pyrrolidone (Co-solvent) | |
| Surfactant | 0.1 |
| Biocide | 0.27 |
| **Total** | 100 |

**Table 10 - Formulation ID, Amount of Solvent and Co-solvent and Smear Value**

| **ID** | **Tripropylene glycol monoethyl ether (Weight %)** | **1-hydroxyethyl-2-pyrrolidone (Weight %)** | **2-pyrrolidone (Weight %)** | **Smear Value (mOD)** |
|---|---|---|---|---|
| 25 | 0 | 16 | 8 | 56 |
| 26 | 0.5 | 15.5 | 8 | 50 |
| 27 | 1 | 15 | 8 | 39 |
| 28 | 1.5 | 14.5 | 8 | 39 |
| 29 | 2 | 14 | 8 | 34 |
| 30 | 3.5 | 12.5 | 8 | 40 |
| 31 | 6 | 10 | 8 | 24 |
| 32 | 11.2 | 4.8 | 8 | 22 |

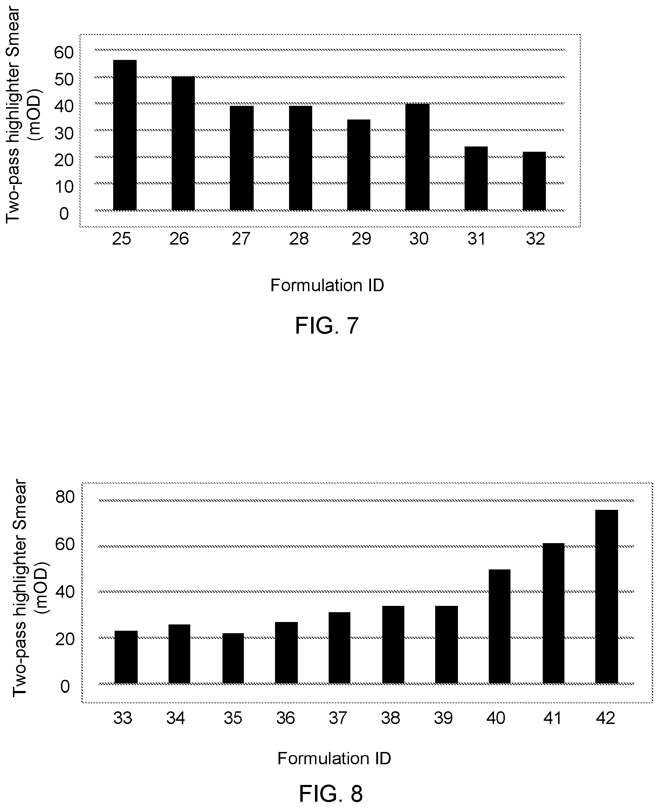

Based on the smear test results above, the greatest improvements in durability of the printed image where found when the composition included 6 wt% and 11.2 wt% of the solvent. However, the compositions that included 11.2 wt% of the solvent began to introduce challenges in printability including, but not limited to, misdirected drop placement, poor nozzle health, and missing nozzles. A figure of the smear test results are shown in FIG. 7. Thus, a range of 1 wt% to 12 wt% of the solvent improved durability, a range of 1 wt% to 8 wt% provides improved durability while retaining more favorable printability characteristics. The results of the smear test provided in Table 10 are also shown graphically in FIG. 7.

### Example 7 - Testing Solvent and Co-solvent Load on Durability

Several additional different ink compositions were formulated that incorporated differing solvent and co-solvent levels. The base formulation for these inks is shown in Table 11 below.

**Table 11 - Ink Composition Base**

| **Ingredient** | **Weight %** |
|---|---|
| Ionized Carbon Black | 4.40 |
| Polyurethane | 1.70 |
| Water | 69.53 |
| 2-ethyl-1,3-hexanediol | See Table 12 Collectively 24.00 |
| 1-hydroxyethyl-2-pyrrolidone | |
| 2-pyrrolidone | |
| Surfactant | 0.10 |
| Biocide | 0.27 |
| Total | 100 |

**Table 12 - Formulation ID, Polyurethane Amount, and Smear Value**

| **ID** | **2-ethyl-1,3-hexanediol (Weight %)** | **1-hydroxyethyl-2-pyrrolidone (Weight %)** | **2-pyrrolidone (Weight %)** | **Smear Value (mOD)** |
|---|---|---|---|---|
| 33 | 10 | 6 | 8 | 23 |
| 34 | 7.5 | 8.5 | 8 | 26 |
| 35 | 5 | 11 | 8 | 22 |
| 36 | 4 | 12 | 8 | 27 |
| 37 | 3 | 13 | 8 | 31 |
| 38 | 2.5 | 13.5 | 8 | 34 |
| 39 | 2 | 14 | 8 | 34 |
| 40 | 1 | 15 | 8 | 50 |
| 41 | 0.5 | 15.5 | 8 | 51 |
| 42 | 0 | 16 | 8 | 76 |

Formulations 33-42 were tested using a two-pass highlighter smear test, as described above. Based on the testing it was determined that the improvements in durability increased with an increase in the amount of solvent (2-ethyl-1,3-hexanediol) in the composition. The results of the smear test provided in Table 12 are shown graphically in FIG. 8.

### Example 8 - Testing Binder Load with 2-ethyl-1,3-hexanediol Solvent

Several different ink compositions were formulated with the same solvent and co-solvent package, but which incorporated differing binder levels. The inkjet ink formulation is shown in Table 13 below, and the variations smear values are shown in Table 14.

**Table 13 - Inkjet Ink Composition**

| **Ingredient** | **Weight %** |
|---|---|
| Ionized Carbon Black | 4.4 |
| Polyurethane | See Table 14 |
| Water | 69.53 |
| 2-ethyl-1,3-hexanediol (Solvent) | 5 |
| 1-hydroxyethyl-2-pyrrolidone (Co-solvent) | 11 |
| 2-pyrrolidone (Co-solvent) | 8 |
| Surfactant | 0.1 |
| Biocide | 0.27 |
| Total | 100 |

**Table 14 - Formulation ID, Polyurethane Amount, and Smear Value**

| **Formulation ID** | **Polyurethane (Weight %)** | **Smear Value (mOD)** |
|---|---|---|
| 43 | 1.5 | 29 |
| 44 | 1.3 | 27 |
| 45 | 1.2 | 33 |
| 46 | 1.1 | 32 |
| 47 | 1 | 31 |
| 48 | 0.85 | 36 |

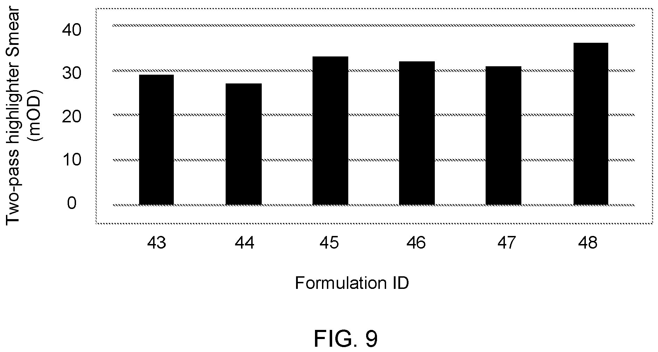

Formulations 43-48 were tested using a two-pass highlighter smear test, as described above. Based on the testing it was determined that a binder load ranging from 1.5 wt% to 0.85 wt% showed an improvement in the durability of the printed image when compared to a composition that did not incorporate the 2-ethyl-1,3-hexanediol solvent. The mOD value for the ink without the durability improving solvent was 89 mOD. The results of the smear test shown in Table 14 are shown graphically in FIG. 9.

### Example 9

Several different solvents and co-solvents were tested to verify durability enhancement in combination with polyurethane to verify that the defined solvents tended to improve durability and the defined co-solvents did not tend to enhance durability. Table 15 below provides the results of these tests, as follows:

**Table 15 - Durability Improvement with Solvents**

| **Liquid Vehicle Component** | **Type** | **Durability Improvement** |
|---|---|---|
| tripropylene glycol | Solvent | Yes |
| tripropylene glycol methyl ether | Solvent | Yes |
| tripropylene glycol monobutyl ether | Solvent | Yes |
| tripropylene glycol monoethyl ether | Solvent | Yes |
| triethylene glycol | Solvent | Yes |
| triethylene glycol methyl ether | Solvent | Yes |
| triethylene glycol monobutyl ether | Solvent | Yes |
| triethylene glycol monomethyl ether | Solvent | Yes |
| diethylene glycol | Solvent | Yes |
| diethylene glycol butyl ether | Solvent | Yes |
| ethylene glycol | Solvent | Yes |
| ethylene glycol butyl ether | Solvent | Yes |
| ethylene glycol phenyl ether | Solvent | Yes |
| 3-methyl-1,3-butanediol | Solvent | Yes |
| 2-ethyl-2-hydroxymethyl-1,3,-propanediol | Solvent | Yes |
| 2-methyl-2,4-pentanediol | Solvent | Yes |
| 3-methyl-1,5-pentadiol | Solvent | Yes |
| 2-ethyl-1,3-hexanediol | Solvent | Yes |
| 2-Pyrrolidone | Co-solvent | No |
| 1-hydroxyethyl-2-pyrrolidone | Co-solvent | No |
| 3-methyl-1,3,5-pentanetriol | Co-solvent | No |

## Claims

1. An inkjet ink composition, comprising:
carbon black pigment;
polyurethane;
at least 50 wt% water;
from 1 wt% to 12 wt% of a solvent having 1 or 2 free hydroxyl groups and 0 to 3 glycol units; and
comprises co-solvent that is different than the solvent or combination of the solvents, wherein the co-solvent is present at a total content from 15 wt% to 25 wt%, and wherein the co-solvent is 1-hydroxyethyl-2-pyrrolidone, 2-pyrrolidone, or a combination thereof.

2. The inkjet ink composition of claim 1, wherein the carbon black pigment is ionized using light, ultraviolet radiation, ozone, or a combination thereof.

3. The inkjet ink composition of claim 1, wherein the solvent or combination of the solvents is present at from 1 wt% to 8 wt%.

4. The inkjet ink composition of claim 1, wherein the solvent or combination of the solvents is present at from 2.5 wt% to 6.5 wt%.

5. The inkjet ink composition of claim 1, wherein the solvent is selected from tripropylene glycol, tripropylene glycol methyl ether, tripropylene glycol monobutyl ether, tripropylene glycol monoethyl ether, triethylene glycol, triethylene glycol methyl ether, triethylene glycol monobutyl ether, triethylene glycol monomethyl ether, diethylene glycol, diethylene glycol butyl ether, ethylene glycol, ethylene glycol butyl ether, ethylene glycol phenyl ether, 3-methyl-1,3-butanediol, 2-ethyl-2-hydroxymethyl-1,3-propanediol, 2-methyl-2,4-pentanediol, 3-methyl-1,5-pentadiol, 2-ethyl-1,3-hexanediol, or a combination thereof.

6. The inkjet ink composition of claim 1, wherein the carbon black is present at from 2wt% to 6 wt%.

7. The inkjet ink composition of claim 1, wherein the polyurethane is present at from 0.1 wt% to 4 wt%.

8. The inkjet ink composition of claim 1, wherein the polyurethane is present at from 0.5 wt% to 3 wt%.

9. The inkjet ink composition of claim 1, wherein the polyurethane has a weight average molecular weight ranging from 3,000 Mw to 70,000 Mw.

10. The inkjet ink composition of claim 1, wherein the polyurethane to pigment weight ratio ranges is from 1:10 to 1:2.

11. A method of making an inkjet ink composition, comprising:
surface treating carbon black pigment to generate ionized carbon black pigment;
admixing the ionized carbon black pigment with a liquid vehicle to form an inkjet ink composition, wherein the inkjet ink composition comprises from 2 wt% to 6 wt% of the ionized carbon black pigment; from 0.1 wt% to 4 wt% polyurethane; at least 50 wt% water; from 1 wt% to 12 wt% of a solvent having 1 or 2 free hydroxyl groups and 0 to 3 glycol units; and co-solvent that is different than the solvent or combination of the solvents, wherein the co-solvent is present at a total content from 15 wt% to 25 wt%, and wherein the co-solvent is 1-hydroxyethyl-2-pyrrolidone, 2-pyrrolidone, or a combination thereof

12. The method of claim 11, wherein the solvent is selected from tripropylene glycol, tripropylene glycol methyl ether, tripropylene glycol monobutyl ether, tripropylene glycol monoethyl ether, triethylene glycol, triethylene glycol methyl ether, triethylene glycol monobutyl ether, triethylene glycol monomethyl ether, diethylene glycol, diethylene glycol butyl ether, ethylene glycol, ethylene glycol butyl ether, ethylene glycol phenyl ether, 3-methyl-1,3-butanediol, 2-ethyl-2-hydroxymethyl-1,3-propanediol, 2-methyl-2,4-pentanediol, 3-methyl-1,5- pentadiol, 2-ethyl-1,3-hexanediol, or a combination thereof.

13. A method of printing onto a print medium, comprising inkjet printing an inkjet ink composition onto a print medium, wherein the inkjet ink composition comprises carbon black pigment; polyurethane; at least 50 wt% water; from 1 wt% to 12 wt% of a solvent having 1 or 2 free hydroxyl groups and 0 to 3 glycol units; and co-solvent that is different than the solvent or combination of the solvents, wherein the co-solvent is present at a total content from 15 wt% to 25 wt%, and wherein the co-solvent is 1-hydroxyethyl-2-pyrrolidone, 2-pyrrolidone, or a combination thereof.

## Patentansprüche

1. Tintenstrahltintenzusammensetzung, die Folgendes umfasst:
ein Kohlenschwarzpigment;
Polyurethan;
wenigstens 50 Gew.-% Wasser;
von 1 Gew.-% bis 12 Gew.-% eines Lösungsmittels, das 1 oder 2 freie Hydroxylgruppen und 0 bis 3 Glykoleinheiten aufweist; und
ein Co-Lösungsmittel umfasst, das sich von dem Lösungsmittel oder einer Kombination der Lösungsmittel unterscheidet, wobei das Co-Lösungsmittel in einem Gesamtgehalt von 15 Gew.-% bis 25 Gew.-% vorhanden ist und wobei das Co-Lösungsmittel 1-Hydroxyethyl-2-pyrrolidon, 2-Pyrrolidon oder eine Kombination davon ist.

2. Tintenstrahltintenzusammensetzung nach Anspruch 1, wobei das Kohlenschwarzpigment unter Verwendung von Licht, ultravioletter Strahlung, Ozon oder einer Kombination davon ionisiert wird.

3. Tintenstrahltintenzusammensetzung nach Anspruch 1, wobei das Lösungsmittel oder die Kombination der Lösungsmittel in einer Menge von 1 Gew.-% bis 8 Gew.-% vorhanden ist.

4. Tintenstrahltintenzusammensetzung nach Anspruch 1, wobei das Lösungsmittel oder die Kombination der Lösungsmittel in einer Menge von 2,5 Gew.-% bis 6,5 Gew.-% vorhanden ist.

5. Tintenstrahltintenzusammensetzung nach Anspruch 1, wobei das Lösungsmittel aus Tripropylenglykol, Tripropylenglykolmethylether, Tripropylenglykolmonobutylether, Tripropylenglykolmonoethylether, Triethylenglykol, Triethylenglykolmethylether, Triethylenglykolmonobutylether, Triethylenglykolmonomethylether, Diethylenglykol, Diethylenglykolbutylether, Ethylenglykol, Ethylenglykolbutylether, Ethylenglykolphenylether, 3-Methyl-1,3-butandiol, 2-Ethyl-2-hydroxymethyl-1,3-propandiol, 2-Methyl-2,4-pentandiol, 3-Methyl-1,5-pentadiol, 2-Ethyl-1,3-hexandiol, oder einer Kombination davon ausgewählt ist.

6. Tintenstrahltintenzusammensetzung nach Anspruch 1, wobei das Kohlenschwarz in einer Menge von 2 Gew.-% bis 6 Gew.-% vorhanden ist.

7. Tintenstrahltintenzusammensetzung nach Anspruch 1, wobei das Polyurethan in einer Menge von 0,1 Gew.-% bis 4 Gew.-% vorhanden ist.

8. Tintenstrahltintenzusammensetzung nach Anspruch 1, wobei das Polyurethan in einer Menge von 0,5 Gew.-% bis 3 Gew.-% vorhanden ist.

9. Tintenstrahltintenzusammensetzung nach Anspruch 1, wobei das Polyurethan ein gewichtsgemitteltes Molekulargewicht zwischen 3.000 Mw und 70.000 Mw aufweist.

10. Tintenstrahltintenzusammensetzung nach Anspruch 1, wobei ein Gewichtsverhältnis von Polyurethan zu Pigment zwischen 1 : 10 und 1 : 2 liegt.

11. Verfahren zum Herstellen einer Tintenstrahltintenzusammensetzung, die Folgendes umfasst:
Oberflächenbehandlung von Kohlenschwarzpigment, um ionisiertes Kohlenschwarzpigment zu erzeugen;
Mischen des ionisierten Kohlenschwarzpigments mit einer flüssigen Trägersubstanz, um eine Tintenstrahltintenzusammensetzung auszubilden, wobei die Tintenstrahltintenzusammensetzung Folgendes umfasst: von 2 Gew.-% bis 6 Gew.-% des ionisierten Kohlenschwarzpigments; von 0,1 Gew.-% bis 4 Gew.-% Polyurethan; wenigstens 50 Gew.-% Wasser; von 1 Gew.-% bis 12 Gew.-% eines Lösungsmittels, das 1 oder 2 freie Hydroxylgruppen und 0 bis 3 Glykoleinheiten aufweist; und ein Co-Lösungsmittel, das sich von dem Lösungsmittel oder der Kombination der Lösungsmittel unterscheidet, wobei das Co-Lösungsmittel in einem Gesamtgehalt von 15 Gew.-% bis 25 Gew.-% vorhanden ist und wobei das Co-Lösungsmittel 1-Hydroxyethyl-2-pyrrolidon, 2-Pyrrolidon oder eine Kombination davon ist.

12. Verfahren nach Anspruch 11, wobei das Lösungsmittel aus Tripropylenglykol, Tripropylenglykolmethylether, Tripropylenglykolmonobutylether, Tripropylenglykolmonoethylether, Triethylenglykol, Triethylenglykolmethylether, Triethylenglykolmonobutylether, Triethylenglykolmonomethylether, Diethylenglykol, Diethylenglykolbutylether, Ethylenglykol, Ethylenglykolbutylether, Ethylenglykolphenylether, 3-Methyl-1,3-butandiol, 2-Ethyl-2-hydroxymethyl-1,3-propandiol, 2-Methyl-2,4-pentandiol, 3-Methyl-1,5-pentadiol, 2-Ethyl-1,3-hexandiol, oder einer Kombination davon ausgewählt ist.

13. Verfahren zum Drucken auf ein Druckmedium, das ein Tintenstrahldrucken einer Tintenstrahltintenzusammensetzung auf ein Druckmedium umfasst, wobei die Tintenstrahltintenzusammensetzung Folgendes umfasst: ein Kohlenschwarzpigment; Polyurethan; wenigstens 50 Gew.-% Wasser; von 1 Gew.-% bis 12 Gew.-% eines Lösungsmittels, das 1 oder 2 freie Hydroxylgruppen und 0 bis 3 Glykoleinheiten aufweist; und ein Co-Lösungsmittel, das sich von dem Lösungsmittel oder der Kombination der Lösungsmittel unterscheidet, wobei das Co-Lösungsmittel in einem Gesamtgehalt von 15 Gew.-% bis 25 Gew.-% vorhanden ist und wobei das Co-Lösungsmittel 1-Hydroxyethyl-2-pyrrolidon, 2-Pyrrolidon oder eine Kombination davon ist.

## Revendications

1. Composition d'encre pour jet d'encre, comprenant :
du pigment noir de carbone ;
du polyuréthane ;
au moins 50 % en poids d'eau ;
de 1 % en poids à 12 % en poids d'un solvant ayant 1 ou 2 groupes hydroxyle libres et 0 à 3 unités glycol ; et
comprenant un cosolvant qui est différent du solvant ou de la combinaison des solvants, le cosolvant étant présent à raison d'une teneur totale de 15 % en poids à 25 % en poids, et le cosolvant étant la 1-hydroxyéthyl-2-pyrrolidone, la 2-pyrrolidone ou une combinaison de celles-ci.

2. Composition d'encre pour jet d'encre selon la revendication 1, dans laquelle le pigment noir de carbone est ionisé à l'aide de lumière, d'un rayonnement ultraviolet, d'ozone ou d'une combinaison de ceux-ci.

3. Composition d'encre pour jet d'encre selon la revendication 1, dans laquelle le solvant ou la combinaison des solvants est présent à raison de 1 % en poids à 8 % en poids.

4. Composition d'encre pour jet d'encre selon la revendication 1, dans laquelle le solvant ou la combinaison des solvants est présent à raison de 2,5 % en poids à 6,5 % en poids.

5. Composition d'encre pour jet d'encre selon la revendication 1, dans laquelle le solvant est sélectionné parmi le tripropylène glycol, l'éther méthylique de tripropylène glycol, l'éther monobutylique de tripropylène glycol, l'éther monoéthylique de tripropylène glycol, le triéthylène glycol, l'éther méthylique de triéthylène glycol, l'éther monobutylique de triéthylène glycol, l'éther monométhylique de triéthylène glycol, le diéthylène glycol, l'éther butylique de diéthylène glycol, l'éthylène glycol, l'éther butylique d'éthylène glycol, l'éther phénylique d'éthylène glycol, le 3-méthyl-1,3-butanediol, le 2-éthyl-2-hydroxyméthyl-1,3-propanediol, le 2-méthyl-2,4-pentanediol, le 3-méthyl-1,5-pentadiol, le 2-éthyl-1,3-hexanediol ou une combinaison de ceux-ci.

6. Composition d'encre pour jet d'encre selon la revendication 1, dans laquelle le noir de carbone est présent à raison de 2 % en poids à 6 % en poids.

7. Composition d'encre pour jet d'encre selon la revendication 1, dans laquelle le polyuréthane est présent à raison de 0,1 % en poids à 4 % en poids.

8. Composition d'encre pour jet d'encre selon la revendication 1, dans laquelle le polyuréthane est présent à raison de 0,5 % en poids à 3 % en poids.

9. Composition d'encre pour jet d'encre selon la revendication 1, dans laquelle le polyuréthane présente un poids moléculaire moyen en poids dans la plage de 3 000 Mw à 70 000 Mw.

10. Composition d'encre pour jet d'encre selon la revendication 1, dans laquelle le rapport pondéral du polyuréthane au pigment est compris dans la plage de 1:10 à 1:2.

11. Procédé de fabrication d'une composition d'encre pour jet d'encre, comprenant :
le traitement de surface d'un pigment noir de carbone pour générer un pigment noir de carbone ionisé ;
le mélange du pigment noir de carbone ionisé à un véhicule liquide pour former une composition d'encre pour jet d'encre, la composition d'encre pour jet d'encre comprenant de 2 % en poids à 6 % en poids du pigment noir de carbone ionisé ; de 0,1 % en poids à 4 % en poids de polyuréthane ; au moins 50 % en poids d'eau ; de 1 % en poids à 12 % en poids d'un solvant ayant 1 ou 2 groupes hydroxyle libres et 0 à 3 unités glycol ; et un cosolvant qui est différent du solvant ou de la combinaison des solvants, le cosolvant étant présent à raison d'une teneur totale de 15 % en poids à 25 % en poids, et le cosolvant étant la 1-hydroxyéthyl-2-pyrrolidone, la 2-pyrrolidone, ou une combinaison de celles-ci.

12. Procédé selon la revendication 11, dans lequel le solvant est sélectionné parmi le tripropylène glycol, l'éther méthylique de tripropylène glycol, l'éther monobutylique de tripropylène glycol, l'éther monoéthylique de tripropylène glycol, le triéthylène glycol, l'éther méthylique de triéthylène glycol, l'éther monobutylique de triéthylène glycol, l'éther monométhylique de triéthylène glycol, le diéthylène glycol, l'éther butylique de diéthylène glycol, l'éthylène glycol, l'éther butylique d'éthylène glycol, l'éther phénylique d'éthylène glycol, le 3-méthyl-1,3-butanediol, le 2-éthyl-2-hydroxyméthyl-1,3-propanediol, le 2-méthyl-2,4-pentanediol, le 3-méthyl-1,5-pentadiol, le 2-éthyl-1,3-hexanediol ou une combinaison de ceux-ci.

13. Procédé d'impression sur un support d'impression, comprenant l'impression à jet d'encre d'une composition d'encre pour jet d'encre sur un support d'impression, dans lequel la composition d'encre pour jet d'encre comprend un pigment noir de carbone ; du polyuréthane ; au moins 50 % en poids d'eau ; de 1 % en poids à 12 % en poids d'un solvant ayant 1 ou 2 groupes hydroxyle libres et 0 à 3 unités glycol ; et un cosolvant qui est différent du solvant ou de la combinaison des solvants, dans lequel le cosolvant est présent à raison d'une teneur totale de 15 % en poids à 25 % en poids, et dans lequel le cosolvant est la 1-hydroxyéthyl-2-pyrrolidone, la 2-pyrrolidone ou une combinaison de celles-ci.
